# EUROPEAN PATENT APPLICATION

(11) **EP 4 592 859 A1**
(43) Date of publication of application: **30.07.2025**
(21) Application number: 23893104.2
(22) Date of filing: 20.06.2023
(51) Int. Cl.: G06F 15/78, G06F 12/00

(54) **DATA PROCESSING METHOD AND SYSTEM-ON-CHIP**

(30) Priority: 22.11.2022 CN 202211463670
(71) Applicant: Huawei Technologies Co., Ltd., Shenzhen, Guangdong 518129 (CN)
(72) Inventor: LEI, Tao, Shenzhen, Guangdong 518129 (CN); XIANG, Qian, Shenzhen, Guangdong 518129 (CN); SHI, Jieke, Shenzhen, Guangdong 518129 (CN); LI, Zongyan, Shenzhen, Guangdong 518129 (CN)
(74) Representative: Gill Jennings & Every LLP
(86) International application number: PCT/CN2023/101330
(87) International publication number: WO 2024/109004

(57) **Abstract**

Embodiments of this application provide a data processing method and a system-on-chip, and relate to the field of chips. The system-on-chip includes a bus, a data format conversion circuit, an on-chip memory, a first circuit, and a second circuit. The first circuit, the second circuit, the on-chip memory, and the data format conversion circuit are respectively coupled to the bus. The data format conversion circuit is coupled to the on-chip memory. The first circuit is configured to generate data. The data format conversion circuit is configured to: obtain the data through the bus; perform data format conversion on the data to obtain target data; and send the target data to the bus, or store the target data in the on-chip memory. The bus is configured to transmit the target data from the data format conversion circuit or the on-chip memory to the second circuit. The second circuit is configured to: obtain the target data in the data format conversion circuit through the bus, or read the target data from the on-chip memory through the bus. According to the solutions provided in this application, processing performance of the system-on-chip can be improved.

## Description

This application claims priority to Chinese Patent Application No. 202211463670.8, filed with the China National Intellectual Property Administration on November 22, 2022 and entitled "DATA PROCESSING METHOD AND SYSTEM-ON-CHIP", which is incorporated herein by reference in its entirety.

### TECHNICAL FIELD

This application relates to the field of chips, and in particular, to a data processing method and a system-on-chip.

### BACKGROUND

A system-on-chip (system-on-chip, SoC) is an application-specific integrated circuit that integrates a CPU and a domain-specific accelerator (Domain Specific Architecture, DSA) (for example, a graphics processing unit (Graphics Processing Unit, GPU), a neural network processing unit (Neural Network Processing Unit, NPU), or a digital signal processor (Digital Signal Processor, DSP)) configured to perform hardware acceleration on a service in a specific domain. The CPU and the DSA of the system-on-chip or different DSAs are different IP cores (Intellectual Property Cores, logic blocks or data blocks of an application-specific integrated circuit or a programmable logic device). In this way, task scheduling and data transfer that are performed between the CPU and the DSA of the system-on-chip or between the different DSAs are collaborative computing across the IP core. The IP core usually uses a DSA architecture oriented to a specific domain, and therefore there are differences in a computing mode, a data format, a scheduling manner, and the like. Consequently, data format conversion needs to be performed during the data transfer in the collaborative computing across the IP core.

In a related technology, a unified data format conversion module is usually configured in a system-on-chip, and the data format conversion module may provide a data format conversion function required by each IP core. However, when invoking the data format conversion module by using software to perform data format conversion, each IP core needs to first write data into a memory. After reading the data from the memory and converting the data, the data format conversion module further needs to write converted data back into the memory. In this case, a delay and a bottleneck that are caused by invocation by using the software (for example, inter-process communication and switching between a user mode and a kernel mode) and a plurality of times of memory reading/writing occur in data format conversion. As a result, processing performance of the system-on-chip easily deteriorates.

### SUMMARY

Embodiments of this application provide a data processing method and a system-on-chip. The system-on-chip can implement data format conversion in a data writing or reading process through a data format conversion circuit that is respectively coupled to a bus and an on-chip memory, and does not need to additionally read/write data for data format conversion after writing or reading is completed. This avoids a delay and a bottleneck that are caused by invocation by using software and a plurality of times of memory reading/writing, and improves processing performance of the system-on-chip.

According to a first aspect, an embodiment of this application provides a system-on-chip, including a bus, a data format conversion circuit, an on-chip memory, a first circuit, and a second circuit. The first circuit, the second circuit, the on-chip memory, and the data format conversion circuit are respectively coupled to the bus. The data format conversion circuit is coupled to the on-chip memory. The first circuit is configured to generate data. The data format conversion circuit is configured to: obtain the data through the bus; perform data format conversion on the data to obtain target data; and send the target data to the bus, or store the target data in the on-chip memory. The bus is configured to transmit the target data from the data format conversion circuit or the on-chip memory to the second circuit. The second circuit is configured to: obtain the target data through the bus, or read the target data from the on-chip memory through the bus.

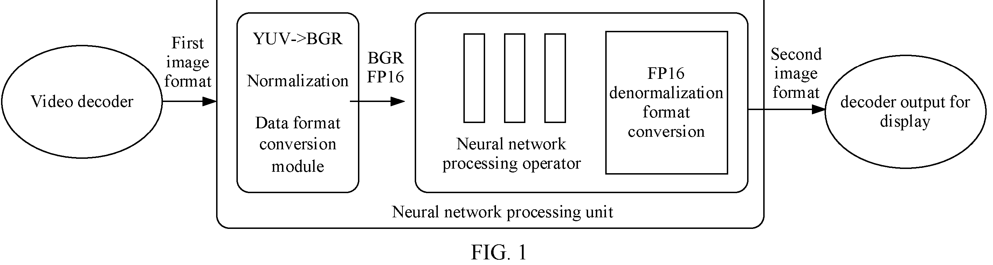

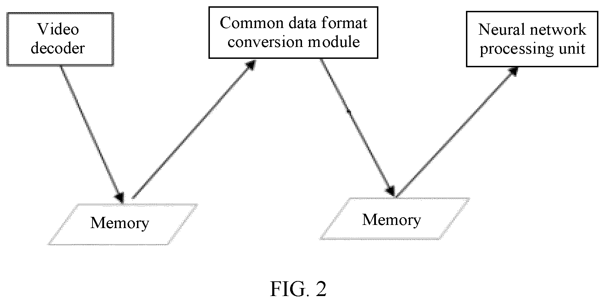

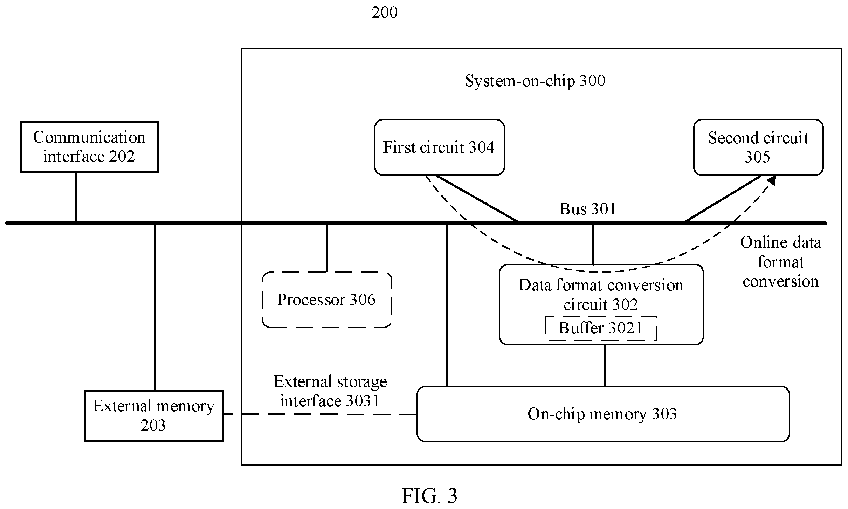

For example, FIG. 1 is a schematic flowchart of an example of independent data format conversion. FIG. 3 is a diagram of a structure of a system-on-chip according to an embodiment of this application. As shown in FIG. 1 and FIG. 3, in a video playing scenario, a first circuit 304 may be a video decoder shown in FIG. 1 and FIG. 2 in this application, and decodes a compressed video bitstream to output a video frame in a YUV format, that is, generates data to be transferred to a second circuit 305. Correspondingly, the second circuit 305 may be, for example, a neural network processing unit NPU shown in FIG. 1 in this application.

In this embodiment of this application, data format conversion can be implemented in a data writing or reading process through the data format conversion circuit that is respectively coupled to the bus and the on-chip memory, and there is no need to additionally read/write data for data format conversion after writing or reading is completed. This avoids a delay and a bottleneck that are caused by invocation by using software and a plurality of times of memory reading/writing, and improves processing performance of the system-on-chip. In addition, the data format conversion circuit in the system-on-chip provided in this embodiment of this application is a data format conversion circuit shared by different IP cores such as the first circuit and the second circuit, and is not an independent data format conversion circuit separately disposed in each IP core. This can increase an area efficiency ratio of the system-on-chip.

According to the first aspect, a buffer is disposed in the data format conversion circuit. The data format conversion circuit is specifically configured to: store, by using the buffer, the data transmitted by the data bus, and obtain the data from the buffer to perform data format conversion.

For example, data is transmitted in a form of a byte stream, and the byte stream corresponding to the data may be considered as sub-data corresponding to the data. For example, the bus transmits first sub-data and second sub-data that correspond to the data to the buffer of the data format conversion circuit, that is, the data format conversion circuit stores the first sub-data and the second sub-data by using the buffer. It is assumed that a data amount of the first sub-data reaches a minimum amount of data that can be processed through data format conversion. In this case, a module for performing data format conversion in the data format conversion circuit obtains the first sub-data from the buffer to perform data format conversion, and similarly, obtains the second sub-data to perform data format conversion. In this way, the data format conversion circuit obtains the data and implements data format conversion.

In this embodiment of this application, the buffer is disposed in the data format conversion circuit. This is applicable to a scenario in which data is obtained in batches, for example, data is obtained in a form of a byte stream. The byte stream is a stream formed by transmitting data based on a byte as a minimum unit in a data transmission process. The byte stream includes bytes, and is mainly used to process binary data.

According to any one of the first aspect or the implementations of the first aspect, the data format conversion circuit is further configured to: when occupied storage space of the buffer reaches a first space threshold, store, by using the on-chip memory, the data transmitted by the bus; and obtain the data from the on-chip memory to perform data format conversion, or obtain the data from the buffer and the on-chip memory to perform data format conversion.

For example, the on-chip memory may be a random access memory (Random Access Memory, RAM), a static random access memory (Static Random Access Memory, SRAM), and the like. The data is transmitted in the form of the byte stream, and the byte stream corresponding to the data may be considered as the sub-data corresponding to the data. For example, the bus transmits the first sub-data and the second sub-data that correspond to the data. That the occupied storage space of the buffer reaches the first space threshold may be, for example, that storage space of the buffer is full or is insufficient to store the data. In this case, that the data transmitted by the bus is stored by using the on-chip memory may include: If the on-chip memory stores the first sub-data and the second sub-data that correspond to the data, the module that performs data format conversion in the data format conversion circuit obtains the data, that is, the first sub-data and the second sub-data, from the on-chip memory to perform data format conversion; or if storage space occupied after the buffer stores the first sub-data corresponding to the data reaches the first space threshold, the on-chip memory stores the second sub-data corresponding to the data, and correspondingly, the module that performs data format conversion in the data format conversion circuit obtains the first sub-data from the buffer and obtains the second sub-data from the on-chip memory, that is, obtains the data from the buffer and the on-chip memory, to perform data format conversion.

In this embodiment of this application, when the storage space of the buffer is full or is insufficient to store the data, the data format conversion circuit may store, in the on-chip memory, the data transmitted by the bus, to cope with a case in which the buffer in the data format converter is insufficient. This is more reliable. In an example, a layout location between the on-chip memory and the data format conversion circuit may be less than or equal to a preset distance threshold. In this way, the data format conversion circuit is close to the on-chip memory, so that storage space of the on-chip memory can be used more conveniently. This is more efficient.

According to any one of the first aspect or the implementations of the first aspect, the system-on-chip further includes an external storage interface. The external storage interface is coupled to the on-chip memory. The external storage interface is configured to connect to an external memory. The data format conversion circuit is further configured to store the target data in the external memory through the external storage interface. The second circuit is further configured to read the target data from the external memory through the bus.

For example, the external memory may be a double data rate synchronous dynamic random access memory (Double Data Rate SDRAM, DDR).

In this embodiment of this application, the data format conversion circuit can store the target data by using the external memory, to ensure reliability of the target data and reduce storage pressure of the on-chip memory.

According to any one of the first aspect or the implementations of the first aspect, the system-on-chip further includes the external storage interface. The external storage interface is coupled to the on-chip memory. The external storage interface is connected to the external memory. The data format conversion circuit is further configured to: when occupied storage space of the on-chip memory reaches a second space threshold, store, in the external memory through the external storage interface, the data transmitted by the bus; and obtain the data from the external memory to perform data format conversion, or obtain the data from the on-chip memory and the external memory to perform data format conversion.

For example, the byte stream corresponding to the data may be considered as the sub-data corresponding to the data. For example, the bus transmits the first sub-data and the second sub-data that correspond to the data. That the occupied storage space of the on-chip memory reaches the second space threshold may be, for example, that the storage space of the on-chip memory is full or is insufficient to store the data. In this case, that the data transmitted by the bus is stored in the external memory through the external storage interface may include: If the external memory stores the first sub-data and the second sub-data that correspond to the data, the module that performs data format conversion in the data format conversion circuit obtains the data, that is, the first sub-data and the second sub-data, from the external memory to perform data format conversion; or if storage space occupied after the on-chip memory stores the first sub-data corresponding to the data reaches the first space threshold, the external memory stores the second sub-data corresponding to the data, and correspondingly, the module that performs data format conversion in the data format conversion circuit obtains the first sub-data from the on-chip memory and obtains the second sub-data from the external memory, that is, obtains the data from the on-chip memory and the external memory, to perform data format conversion.

In this embodiment of this application, when the storage space of the on-chip memory is full or is insufficient to store the data, the data format conversion circuit can store, in the external memory through the external storage interface, the data transmitted by the bus, that is, push a byte stream corresponding to data on which data format conversion is to be performed into the DDR, to cope with a case in which space of the on-chip memory is insufficient. This is more reliable.

According to any one of the first aspect or the implementations of the first aspect, the system-on-chip further includes a processor. The first circuit is further configured to: before generating the data, send an allocation request to the processor to apply for address space for storing the data and indicate to perform data format conversion on the data. The processor is configured to: allocate the address space for the data based on the allocation request, and fill a format conversion identifier in an extended bit of an address corresponding to the address space. The first circuit is specifically configured to generate the data based on the address. The bus is specifically configured to: identify the extended bit of the address to determine the format conversion identifier, and send the data to the data format conversion circuit based on the format conversion identifier.

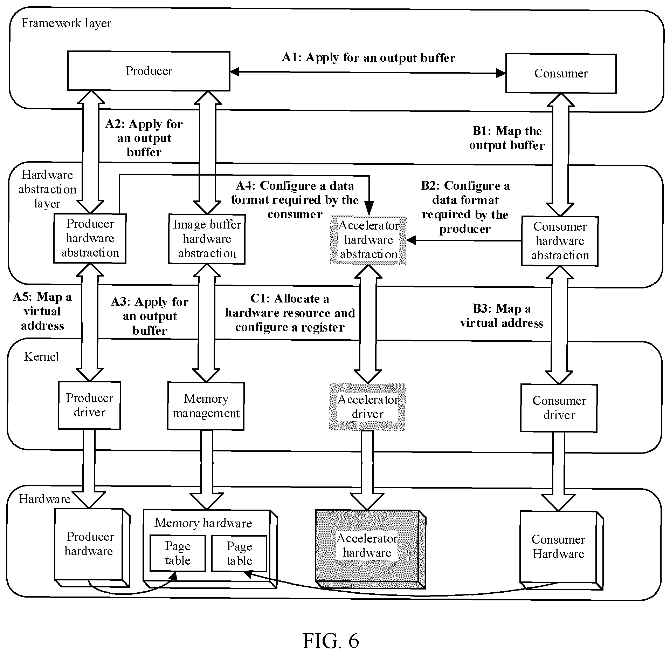

For example, the first circuit may fill the format conversion identifier in the allocation request to indicate that there is a data format conversion requirement, so that when the format conversion identifier is identified, the processor can fill the format conversion identifier in the extended bit of the address corresponding to the address space. That the first circuit generates the data based on the address may include: The first circuit writes a byte corresponding to the generated data into the address space corresponding to the address, to obtain the data, that is, generates the data. For example, FIG. 6 is a flowchart of a data processing method according to an embodiment of this application. As shown in FIG. 6, the address space may be an output buffer.

This embodiment of this application may be applied to a scenario in which the first circuit writes data into the second circuit. The first circuit indicates the data format conversion requirement in the allocation request, so that the processor can fill the format conversion identifier in the extended bit of the physical address, to implement data format conversion in a data writing process, and no additional reading/writing operation is required for a memory. This can improve performance of the system-on-chip.

According to any one of the first aspect or the implementations of the first aspect, the system-on-chip further includes the processor. The first circuit is further configured to: before generating the data, send the allocation request to the processor to apply for the address space for storing the data and indicate that the data has a data format conversion requirement. The processor is configured to: allocate the address space for the data, and fill the format conversion identifier in the extended bit of the address corresponding to the address space. The first circuit is specifically configured to generate the data based on the address. The second circuit is further configured to: before obtaining the target data in the data format conversion circuit through the bus or reading the target data from the on-chip memory through the bus, obtain the address by using the processor, and send a read request including the address. The bus is further configured to: identify the extended bit of the address in the read request to determine the format conversion identifier, and send the read request to the data format conversion circuit based on the format conversion identifier. The data format conversion circuit is specifically configured to: read the data based on the address in the read request, and perform data format conversion on the data to obtain the target data.

This embodiment of this application may be applied to a scenario in which the second circuit reads data from the first circuit. The format conversion identifier is filled in the extended bit of the physical address, to implement data format conversion in a data reading process, and no additional reading/writing operation is required for a memory. This can improve performance of the system-on-chip.

According to a second aspect, an embodiment of this application provides a data processing method, applied to a system-on-chip. The system-on-chip includes a bus, a data format conversion circuit, an on-chip memory, a first circuit, and a second circuit. The first circuit, the second circuit, the on-chip memory, and the data format conversion circuit are respectively coupled to the bus. The data format conversion circuit is coupled to the on-chip memory. The method includes: The first circuit generates data. The data format conversion circuit obtains the data through the bus; performs data format conversion on the data to obtain target data; and sends the target data to the bus, or stores the target data in the on-chip memory. The bus transmits the target data from the data format conversion circuit or the on-chip memory to the second circuit. The second circuit obtains the target data in the data format conversion circuit through the bus, or reads the target data from the on-chip memory.

According to the second aspect, a buffer is disposed in the data format conversion circuit. Before the data format conversion circuit performs data format conversion on the data, the method further includes: The data format conversion circuit stores, by using the buffer, the data transmitted by the bus, and obtains the data from the buffer to perform data format conversion.

According to any one of the second aspect or the implementations of the second aspect, before the data format conversion circuit stores, by using the buffer, the data transmitted by the bus, the method further includes:

When occupied storage space of the buffer reaches a first space threshold, the data format conversion circuit stores, by using the on-chip memory, the data transmitted by the bus; and obtains the data from the on-chip memory to perform data format conversion, or obtains the data from the buffer and the on-chip memory to perform data format conversion.

According to any one of the second aspect or the implementations of the second aspect, the system-on-chip further includes an external storage interface. The external storage interface is coupled to the on-chip memory. The external storage interface is connected to an external memory. After the data format conversion circuit performs data format conversion on the data to obtain the target data, the method further includes: The data format conversion circuit stores the target data in the external memory through the external storage interface. The second circuit reads the target data from the external memory through the bus.

According to any one of the second aspect or the implementations of the second aspect, the system-on-chip further includes the external storage interface. The external storage interface is coupled to the on-chip memory. The external storage interface is connected to the external memory. Before the data format conversion circuit stores, by using the on-chip memory, the data transmitted by the bus, the method further includes: When occupied storage space of the on-chip memory reaches a second space threshold, the data format conversion circuit stores the data in the external memory through the external storage interface to perform data format conversion, or obtains the data from the on-chip memory and the external memory to perform data format conversion.

According to any one of the second aspect or the implementations of the second aspect, the system-on-chip further includes a processor. That the first circuit generates data to be transferred to the second circuit includes: The first circuit sends an allocation request to the processor to apply for address space for storing the data and indicate to perform data format conversion on the data. The processor allocates the address space for the data based on the allocation request, and fills a format conversion identifier in an extended bit of an address corresponding to the address space. The first circuit generates, based on the address, the data to be transferred to the second circuit. That the data format conversion circuit obtains the data through the bus includes: The bus identifies the extended bit of the address to determine the format conversion identifier, and sends the data to the data format conversion circuit based on the format conversion identifier.

According to any one of the second aspect or the implementations of the second aspect, the system-on-chip further includes the processor. That the first circuit generates data to be transferred to the second circuit includes: The first circuit sends the allocation request to the processor to apply for the address space for storing the data and indicate to perform data format conversion on the data. The processor allocates the address space for the data based on the allocation request, and fills the format conversion identifier in the extended bit of the address corresponding to the address space. The first circuit generates, based on the address, the data to be transferred to the second circuit. Before the second circuit obtains the target data in the data format conversion circuit through the bus, or reads the target data from the on-chip memory, the method further includes: The second circuit obtains the address by using the processor, and sends a read request including the address. That the data format conversion circuit obtains the data through the bus includes: The bus identifies the extended bit of the address in the read request to determine the format conversion identifier, and sends the read request to the data format conversion circuit based on the format conversion identifier. The data format conversion circuit reads the data based on the address in the read request.

Any one of the second aspect and the implementations of the second aspect corresponds to any one of the first aspect and the implementations of the first aspect. For technical effect corresponding to the second aspect and any one of the implementations of the second aspect, refer to technical effect corresponding to the first aspect and any one of the implementations of the first aspect. Details are not described herein again.

According to a third aspect, an embodiment of this application provides an electronic device, including a system-on-chip and a memory. The memory is configured to store one or more programs. When the one or more programs are executed by the system-on-chip, the system-on-chip is enabled to execute instructions in the method in any one of the second aspect or the possible implementations of the second aspect.

According to a fourth aspect, an embodiment of this application provides a computer-readable medium, configured to store a computer program, where the computer program includes instructions for performing the method in any one of the second aspect or the possible implementations of the second aspect.

According to a fifth aspect, an embodiment of this application provides a computer program, where the computer program includes instructions for performing the method in any one of the second aspect or the possible implementations of the second aspect.

### BRIEF DESCRIPTION OF DRAWINGS

FIG. 1 is a schematic flowchart of an example of independent data format conversion;
FIG. 2 is a schematic flowchart of an example of common data format conversion;
FIG. 3 is a diagram of a structure of a system-on-chip according to an embodiment of this application;
FIG. 4a is a diagram of a software architecture of a system-on-chip according to an embodiment of this application;
FIG. 4b is a diagram of a software architecture of a system-on-chip according to an embodiment of this application;
FIG. 5 is a flowchart of a data processing method according to an embodiment of this application;
FIG. 6 is a flowchart of a data processing method according to an embodiment of this application;
FIG. 7 is a flowchart in which a data processing method is applied to a data writing scenario according to an embodiment of this application; and
FIG. 8 is a flowchart in which a data processing method is applied to a data reading scenario according to an embodiment of this application.

### DESCRIPTION OF EMBODIMENTS

To make objectives, technical solutions, and advantages of this application clearer, the following clearly and completely describes the technical solutions in this application with reference to accompanying drawings in this application. It is clear that the described embodiments are a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as an indication or implication of relative importance or an indication or implication of an order. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one piece (item)" means one or more, and "a plurality of" means two or more. "Installation", "connection", "interconnection", and the like should be understood in a broad sense, for example, may be an electrical connection, a mechanical connection, fastening, a detachable connection, or an integrated connection; or may be a direct connection, an indirect connection through an intermediate medium, or communication between interiors of two elements. In addition, the terms "include", "have", or any variant thereof are intended to cover non-exclusive inclusion, for example, include a series of steps or units. A method, system, product, or device is not necessarily limited to those steps or units expressly listed, but may include another step or unit not expressly listed or inherent to such a process, method, product, or device. "On", "below", "left", "right", and the like are used only relative to orientations of components in the accompanying drawings. These directional terms are relative concepts, are used for relative descriptions and clarifications, and may change accordingly based on changes of positions at which the components in the accompanying drawings are placed.

It should be understood that in this application, "at least one piece (item)" means one or more, and "a plurality of" means two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate a, b, c, "a and b", "a and c", "b and c", or "a, b, and c", where a, b, and c may be singular or plural.

In a related technology, a CPU and a domain-specific accelerator DSA are integrated into a system-on-chip. The CPU, the DSA, and different DSAs are implemented by IP cores of different structures, to form a heterogeneous system in which data needs to be transferred between different IP cores. For the heterogeneous system, data that can be processed by the different IP cores have different formats. Therefore, data format conversion is required during the data transfer between the different IP cores. The following describes a manner of data format conversion between different IP cores by using an example with reference to FIG. 1 and FIG. 2.

For example, FIG. 1 is a schematic flowchart of an example of independent data format conversion. As shown in FIG. 1, different IP cores in a system-on-chip include a video decoder and a neural network processing unit (Neural Network Processing Unit, NPU). The video decoder usually can output only an image in a first image format (for example, a YUV format), and a neural network processing operator (for example, a super-resolution model that is a neural network model for mapping a low-resolution image to a high-resolution image for image processing) in the NPU usually can process only an image in a second image format (an RGB format) that is different from the first image format. In this way, data format conversion needs to be performed when data is transferred between the video decoder and the NPU. For example, a data format conversion module is disposed inside the NPU. The data format conversion module is dedicated to the NPU, and implements independent data format conversion. For example, after receiving data in a YUV format output by the video decoder, the NPU normalizes the data in the YUV format by using the built-in data format conversion module, to obtain FP16 data in a BGR format (FP16 indicates half-precision data, and is a data format suitable for AI computing on a mobile terminal side), and then sends the FP16 data in the BGR format to the neural network processing operator such as the super-resolution model for FP16 denormalization format conversion, to obtain data in the second image format (for example, RGBX, where X represents that one channel is added to three primary color RGB channels to store information different from three primary colors). In this way, the data in the second format image may be sent as the decoder output for display, that is, the image in the second image format is displayed.

However, in the independent data format conversion manner shown in FIG. 1, a data format conversion module needs to be added to each IP core. This greatly increases a chip area, resulting in an increase in costs. Therefore, only a function or performance of the data format conversion module can be traded off under a limited chip area budget. In addition, same functions (such as color space conversion, image rotation, and image zooming) of data format conversion modules in different IP cores cannot be reused, resulting in a low area efficiency ratio.

For example, FIG. 2 is a schematic flowchart of an example of common data format conversion. As shown in FIG. 2, data format conversion between a video decoder and a neural network processing unit is implemented by using a common data format conversion module. The common data format conversion module is a unified data format conversion module in a system-on-chip, and provides a data format conversion service for each subsystem, that is, an IP core. After writing data into a memory, a source IP core, for example, the video decoder, as a data producer invokes the common data format conversion module by using software to perform data format conversion processing, and then the common data format conversion module reads the data in the memory, performs format conversion, and writes converted data back into the memory. In this case, the video decoder continues to notify, by using software, a destination IP core, for example, the neural network processing unit as a data consumer, that data format conversion is completed and subsequent processing may be performed; and the neural network processing unit correspondingly reads the converted data from the memory. It may be understood that, compared with that in FIG. 1 in this application, the common format conversion module integrates a data format conversion function originally distributed inside each IP core, to implement function reuse. This helps increase an area efficiency ratio of a SoC.

However, in the foregoing manner in which the common data format conversion module is used, the video decoder needs to first write the data into the memory, and the common data format conversion module needs to read the data from the memory, resulting in additional reading/writing of the memory. This significantly increases power consumption and causes a delay in a case of a large amount of data. In addition, a delay (for example, inter-process communication and switching between a user mode and a kernel mode) may be easily caused when the common data format conversion module is invoked by using the software. In a scenario with a high performance requirement (for example, a scenario with a high video frame rate), frequent software scheduling may cause a performance bottleneck.

Therefore, an embodiment of this application provides a system-on-chip, to resolve the foregoing problems. For example, the system-on-chip provided in this embodiment of this application is used in the data format conversion scenarios shown in FIG. 1 and FIG. 2. Data format conversion can be implemented in a data writing or reading process through a data format conversion circuit that is respectively coupled to a bus and an on-chip memory, and there is no need to additionally read/write data for data format conversion after writing or reading is completed. This avoids a delay and a bottleneck that are caused by invocation by using software and a plurality of times of memory reading/writing, and improves processing performance of the system-on-chip. In addition, the data format conversion circuit in the system-on-chip provided in this embodiment of this application is a data format conversion circuit shared by different IP cores such as a first circuit and a second circuit, and is not an independent data format conversion circuit separately disposed in each IP core. This can increase an area efficiency ratio of the system-on-chip. That is, the data format conversion circuit is used in a plurality of IP cores instead of being dedicated to one IP core.

The following first describes the system-on-chip provided in embodiments of this application with reference to the accompanying drawings.

Embodiments of this application may be applied to the system-on-chip, and the system-on-chip may run on an electronic device. For example, the electronic device may be specifically a mobile terminal, a computer, a smart large screen, a wearable intelligent device, a tablet computer, or the like. For ease of description and proper layout, the following specifically describes structures of the system-on-chip and the electronic device by using an electronic device including a system-on-chip as an example. FIG. 3 is a diagram of a structure of an electronic device including a system-on-chip according to an embodiment of this application. As shown in FIG. 3, the electronic device 200 may include a system-on-chip 300, a communication interface 202, and an external memory 203.

The system-on-chip 300 may include a bus 301, a data format conversion circuit 302, an on-chip memory 303, a first circuit 304, and a second circuit 305. The first circuit 304, the second circuit 305, the on-chip memory 303, and the data format conversion circuit 302 are respectively coupled to the bus 301. The data format conversion circuit 302 is coupled to the on-chip memory 303. The foregoing coupling may be, for example, a connection through a circuit, or interaction by using software. Optionally, the first circuit 304 and the second circuit 305 may be the foregoing different IP cores. At least one of the first circuit 304 and the second circuit 305 may be a hardware logic circuit or a processing circuit that can run software. This is not limited in embodiments.

The first circuit 304 is configured to generate data. For example, in a video playing scenario, the first circuit 304 may be the video decoder shown in FIG. 1 and FIG. 2 in this application, and decodes a compressed video bitstream to output a video frame in a YUV format, that is, generates data to be transferred to the second circuit 305. Correspondingly, the second circuit 305 may be, for example, the neural network processing unit NPU shown in FIG. 1 and FIG. 2 in this application.

The data format conversion circuit 302 is configured to obtain, through the bus 301, the data generated by the first circuit 304. In an optional implementation, after generating the data, the first circuit 304 writes the data into a memory, for example, the on-chip memory 303, through the bus 301. In this case, the data passes through the bus 301, so that the bus 301 can transmit the data to the data format conversion circuit 302. In another optional implementation, after generating the data, the first circuit 304 writes the data into a memory, for example, the on-chip memory 303, through the bus 301. The second circuit 305 sends a read request for the data through the bus 301, and the bus 301 sends the read request to the data format conversion circuit 302, so that the data format conversion circuit can obtain the data from the memory based on the read request.

The on-chip memory 303 may be used as a system buffer of the system-on-chip, and each IP core of the system-on-chip 300, for example, the first circuit 304 and the second circuit 305, may use the on-chip memory 304. For example, the on-chip memory 304 may specifically include a random access memory (Random Access Memory, RAM), a static random access memory (Static Random Access Memory, SRAM), and the like.

The data format conversion circuit 302 is configured to: perform data format conversion on the data obtained through the bus 301, to obtain target data; and send the target data to the bus 301, or store the target data in the on-chip memory 303. In an optional implementation, the first circuit 304 performs a writing operation on the generated data. In this case, the data format conversion circuit 302 may store the target data in the on-chip memory 303. In an optional implementation, the second circuit 305 performs a reading operation on the data generated by the first circuit 304. In this case, the data format conversion circuit 302 may send the target data to the bus 301.

Correspondingly, the bus 301 is configured to send the target data from the data format conversion circuit 302 or the on-chip memory 303 to the second circuit 305. The second circuit 305 is configured to receive the target data from the bus 301, or read the target data from the on-chip memory 303 through the bus 301. For example, the bus 301 may be connected in series to each IP core (for example, the first circuit 304 and the second circuit 305) in a heterogeneous system, that is, the system-on-chip 300, to provide a communication channel between components in the system-on-chip 300. For example, the bus (Bus) 301 is a transmission harness including conducting wires. Based on a type of transmitted information, the bus 301 may be a bus system, and specifically includes a data bus, an address bus, and a control bus that are configured to transmit data, a data address, and a control signal respectively.

In an optional implementation, after the data format conversion circuit 302 stores the target data in the on-chip memory 303, the bus 301 may send the target data to the second circuit 305, to implement a data transfer operation of writing the data into the second circuit 305 by the first circuit 304. In an optional implementation, the data format conversion circuit 302 may send the target data to the bus 301, and the bus 301 feeds back the data to the second circuit 305, to implement a data transfer operation of reading the data from the first circuit 304 by the second circuit 305.

In this embodiment of this application, the data format conversion circuit in the system-on-chip may perform, through the bus, data format conversion on the read/written data in a data reading/writing process performed between the first circuit and the second circuit, that is, achieve effect of online data format conversion shown in FIG. 3. Therefore, data reading/writing between the first circuit and the second circuit is data transfer, there is no need to additionally perform a reading/writing operation on the memory to implement data format conversion, and there is no need to additionally perform inter-process communication between the first circuit and the second circuit to implement data format conversion (for example, the first circuit invokes software such as a process to instruct the second circuit to read the target data). This greatly improves performance of the system-on-chip, and reduces a performance bottleneck.

In addition, in the system-on-chip shown in FIG. 3, the data format conversion circuit is disposed between the bus and the on-chip memory or the external memory. This can shorten a path from the first circuit or the second circuit to the on-chip memory or the external memory through the data format conversion circuit, thereby further improving efficiency.

In an optional implementation, the data format conversion circuit 302 obtains data in a form of a data block, for example, a byte stream. The data block is sub-data obtained by dividing data. In this way, the data format conversion circuit may store the obtained byte stream in the on-chip memory 303 to obtain the data, that is, the complete data generated by the first circuit 304. The byte stream is a stream formed by transmitting data based on a byte as a minimum unit in a data transmission process. The byte stream includes bytes, and is mainly used to process binary data.

Alternatively, still refer to FIG. 3. A buffer 3021 (equivalent to an online buffer (online buffer)) may be disposed in the data format conversion circuit 302, and is configured to store the byte stream obtained by the data format conversion circuit 302 to obtain the data. That is, the online buffer is disposed in the data format conversion circuit to store data that is read or written online. In this way, the data format conversion circuit 302 can more efficiently store the obtained byte stream in the buffer 3021.

In an optional implementation, the data format conversion circuit 302 may be further configured to store the data in the on-chip memory 303 when occupied storage space of the buffer 3021 reaches a first space threshold. In other words, when storage space of the buffer 3021 is full or is insufficient to store the data, the data format conversion circuit may store the obtained data in the on-chip memory 303, to cope with a case in which the buffer in the data format converter is insufficient. This is more reliable. In an example, a layout location between the on-chip memory 303 and the data format conversion circuit 302 may be less than or equal to a preset distance threshold. In this way, the data format conversion circuit 302 is close to the on-chip memory 303, so that storage space of the on-chip memory 303 can be used more conveniently, in other words, the obtained data can be pushed into the on-chip memory 303.

In an optional implementation, still refer to FIG. 3. The system-on-chip 300 may further include an external storage interface 3031. The external storage interface 3031 is coupled to the on-chip memory 303. The external storage interface 3031 is configured to connect to the external memory 203. Correspondingly, the data format conversion circuit 302 is further configured to store the target data in the external memory 203 through the external storage interface 3031. The second circuit 305 is further configured to read the target data from the external memory through the bus 301. For example, the external memory 203 may be a double data rate synchronous dynamic random access memory (Double Data Rate SDRAM, DDR). In this way, the data format conversion circuit 302 can store the target data by using the external memory 203, to ensure reliability of the target data and reduce storage pressure of the on-chip memory 303.

In an optional implementation, the data format conversion circuit 302 is further configured to store the data in the external memory through the external storage interface 3031 when occupied storage space of the on-chip memory 303 reaches a second space threshold. In this way, when the storage space of the on-chip memory 303 is full or is insufficient to store the data, the data format conversion circuit can push the obtained data, namely, data on which data format conversion is to be performed, into the DDR, to cope with a case in which space of the on-chip memory is insufficient. This is more reliable. It may be understood that a reading/writing speed of the on-chip memory 303 (for example, the SRAM) is far faster than that of the DDR, and power consumption of the on-chip memory 303 is also far lower than that of the DDR.

In the foregoing optional embodiment, space of the on-chip memory or the external memory may be fully used, to reduce a requirement for the buffer in the data format conversion circuit and ensure data format conversion performance.

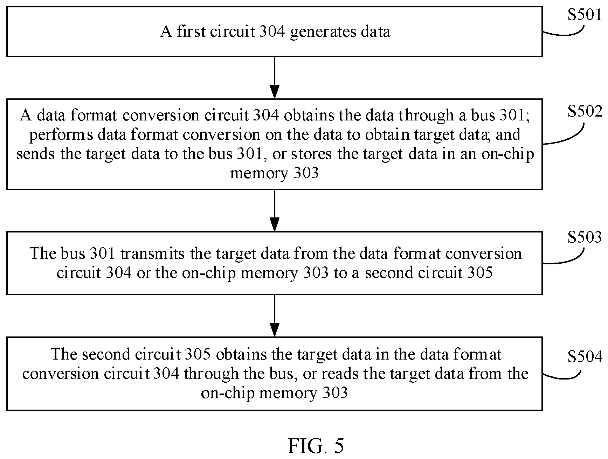

In an optional implementation, the system-on-chip 300 may further include a processor 306 coupled to the first circuit 304 and the second circuit 305 through the bus 301. The processor 306 is configured to allocate address space to the first circuit 304, where the address space is used to store the data generated by the first circuit 304. Optionally, the processor 306 may be further configured to fill a format conversion identifier in an extended bit of an address corresponding to the address space, to ensure that the data transferred in the reading/writing process can be transmitted to the data format conversion circuit 302 through the bus. For proper layout, for a specific process of filling the format conversion identifier by the processor 306, refer to related descriptions in the embodiment in FIG. 5.

For example, the processor 306 may include one or more processing units. For example, the processor 306 may include a central processing unit (Central Processing Unit, CPU), an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural network processing unit (neural network processing unit, NPU), and/or the like. Different processing units may be independent devices, or may be integrated into one or more processors. The controller may be a nerve center and a command center of the electronic device 200. The controller may generate an operation control signal based on instruction operation code and a timing signal, to complete control of instruction reading and instruction execution.

The communication interface 203 is suitable for any electronic device such as a transceiver, and is configured to communicate with another device or a communication network such as an ethernet, a radio access network (radio access network, RAN), or a wireless local area network (wireless local area network, WLAN).

FIG. 3 is the diagram of the structures of the electronic device 200 and the system-on-chip 300. It should be understood that the electronic device 200 and the system-on-chip 300 shown in FIG. 3 are merely examples of the electronic device and the system-on-chip respectively, and the electronic device 200 and the system-on-chip 300 may have more or fewer components than those shown in the figure, may combine two or more components, or may have different component configurations. Various components shown in FIG. 3 may be implemented in hardware including one or more signal processing and/or application-specific integrated circuits, software, or a combination of hardware and software.

A software system of the system-on-chip 300 may use a layered architecture, an event-driven architecture, a microkernel architecture, a microservice architecture, or a cloud architecture. The following describes a software structure of the system-on-chip 300 by using an example.

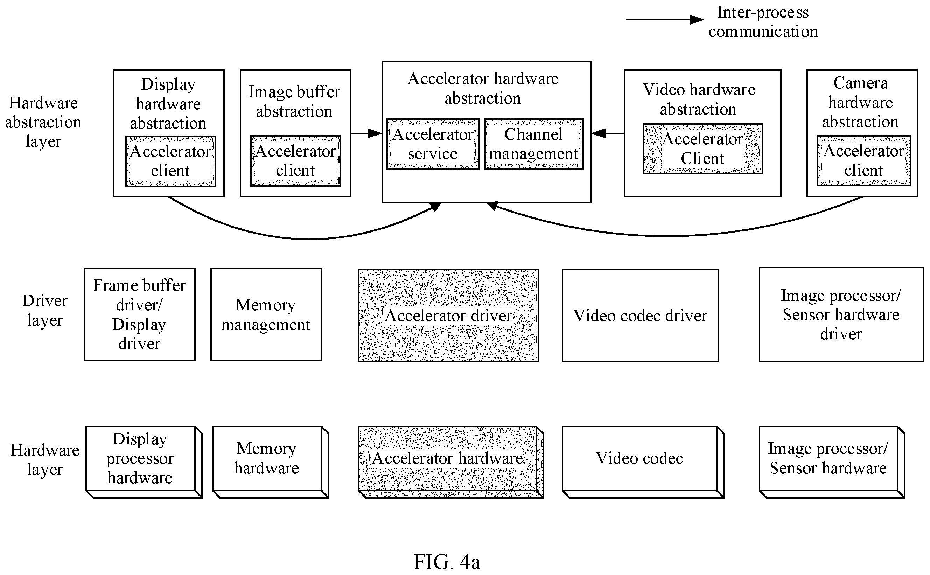

FIG. 4a is a diagram of a software architecture of a system-on-chip according to an embodiment of this application. As shown in FIG. 4a, the software architecture of the system-on-chip may include a hardware layer, a driver layer, and a hardware abstraction layer.

The hardware abstraction layer (HAL) includes abstraction of hardware at the hardware layer, for example, display hardware abstraction for display processor hardware abstraction, image buffer abstraction for memory hardware abstraction, accelerator hardware abstraction for abstraction of accelerator hardware, that is, the data format conversion circuit 302, video hardware abstraction for video codec abstraction, and camera hardware abstraction for image processor/sensor hardware abstraction. The hardware abstraction layer is essentially a group of application programming interfaces (Application Programming Interfaces, APIs) that perform operations on hardware, and is a result of hardware function abstraction. The hardware abstraction layer provides a service for an operating system and an application through the API. Usually, the HAL may be configured to perform related hardware initialization, a data input/output operation, a hardware device configuration operation, and the like.

Still refer to FIG. 4a. Control logic of the data format conversion circuit 302 may exist in a form of an accelerator service at the hardware abstraction layer. The accelerator service provides an acceleration interface for hardware abstraction, such as the display hardware abstraction, that needs to perform data format conversion, to invoke. For example, the display hardware abstraction creates an accelerator client, to request, through the acceleration interface, the accelerator hardware abstraction to provide the accelerator service. In this case, inter-process communication is performed between the display hardware abstraction and the acceleration hardware abstraction. It may be understood that the inter-process communication is a part of a data transfer process performed between a first circuit and a second circuit, and is not additional inter-process communication added outside the data transfer process. In addition, channel management is configured to manage communication between channels respectively corresponding to hardware abstraction, that is, a plurality of accelerator clients, to ensure accurate data format conversion.

It may be understood that the data format conversion circuit 302 may be a hardware logic circuit. A specific manner in which the hardware abstraction of the data format conversion circuit 302 performs data format conversion on obtained data may be set based on an application scenario. This is not limited in embodiments of this application. For example, in a video playing scenario, the manner of the data format conversion may be normalization processing of converting a video frame in a YUV format into an FP16 video frame in a BGR format shown in FIG. 1.

The driver layer, namely, a kernel driver layer, is configured to provide a driver. The driver is a program added to an operating system, and includes information about a hardware device. The information can ensure that a device including the driver layer communicates with a peer device. Corresponding to the hardware layer, the driver layer in FIG. 4a may include a frame buffer/display driver, memory management, an accelerator driver, namely, a driver of the data format conversion circuit 302, a video codec driver, and an image processor/sensor hardware driver. Each module at the kernel driver layer may receive a control instruction of a corresponding module at the hardware abstraction layer. For example, the accelerator driver is configured to receive a control instruction of the accelerator hardware abstraction, to configure a function and the like for the data format conversion circuit 302, that is, the accelerator hardware.

The hardware layer includes display processor hardware, memory hardware, accelerator hardware, a video codec, and image processor/sensor hardware. The accelerator hardware may be specifically the data format conversion circuit 302 shown in FIG. 3. For details, refer to the existing descriptions in the embodiment in FIG. 3. Details are not described herein again. The display processor hardware is configured to display data such as an image. The memory hardware is configured to provide a memory. For example, the memory may be a DDR or an SRAM. The video codec is configured to encode or decode a video. The image processor/sensor hardware is configured to process an image, collect an image, or the like.

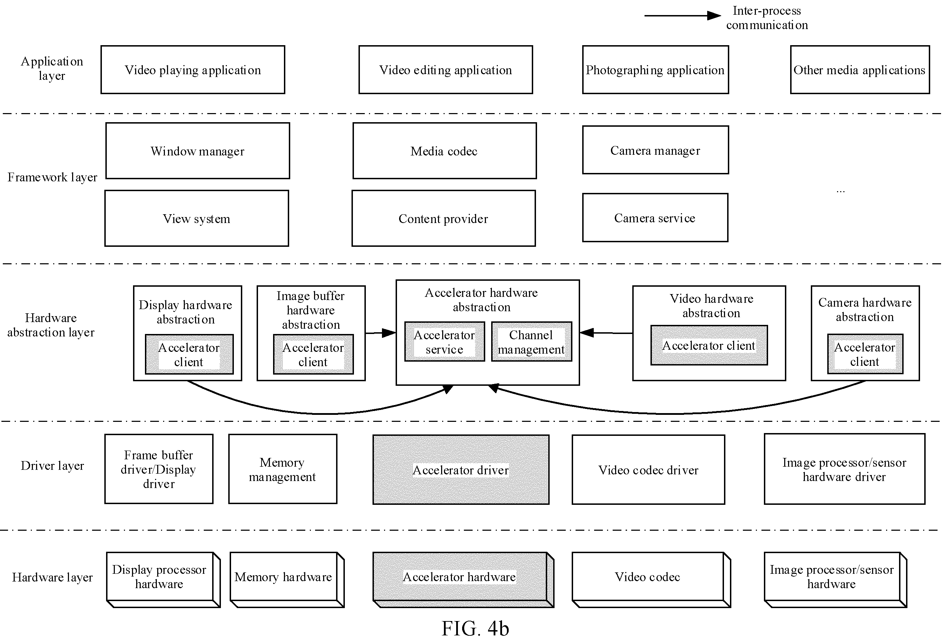

FIG. 4b is a diagram of a software architecture of a system-on-chip according to an embodiment of this application. As shown in FIG. 4b, the system-on-chip 300 provided in this embodiment of this application may be used in an Android system with a layered architecture. Correspondingly, a software architecture of the system-on-chip 300 may further include an application layer and a framework layer based on those in FIG. 4a. A part that is the same as that in FIG. 4a is not described herein again. For details, refer to existing descriptions in FIG. 4a.

The application layer, namely, the application layer, may include a series of application packages. The application package may include a video playing application, a video editing application, a photographing application, another media application, and the like shown in FIG. 4b.

The framework layer, namely an application framework layer, provides an API and a programming framework for an application at the application layer. The application framework layer includes some predefined functions. The predefined function may include a window manager, a media codec, a camera manager, a view system, a content provider, a camera service, and the like shown in FIG. 4b.

For specific functions of various modules at the application layer and the framework layer, refer to an existing related technology in the Android system. Details are not described herein again.

It may be understood that the components shown in FIG. 4a and FIG. 4b do not constitute a specific limitation on the system-on-chip 300. In some other embodiments of this application, the system-on-chip 300 may include more or fewer components than those shown in the figure, or combine some components, or split some components, or have different component arrangements.

For ease of understanding, the following describes, with reference to FIG. 5 to FIG. 8, a data processing method applied to the system-on-chip 300.

FIG. 5 is a flowchart of a data processing method according to an embodiment of this application. As shown in FIG. 5, the data processing method is applied to the system-on-chip 300. The system-on-chip 300 may include the bus 301, the data format conversion circuit 302, the on-chip memory 303, the first circuit 304, and the second circuit 305 that are shown in FIG. 3. The first circuit 304, the second circuit 305, the on-chip memory 303, and the data format conversion circuit 302 are respectively coupled to the bus 301. The data format conversion circuit 302 is coupled to the on-chip memory 303. The method may include but is not limited to the following steps.

S501: The first circuit 304 generates data.

S502: The data format conversion circuit 304 obtains the data through the bus 301; performs data format conversion on the data to obtain target data; and sends the target data to the bus 301, or stores the target data in the on-chip memory 303.

S503: The bus 301 transmits the target data from the data format conversion circuit 304 or the on-chip memory 303 to the second circuit 305.

S504: The second circuit 305 obtains the target data in the data format conversion circuit 304 through the bus, or reads the target data from the on-chip memory 303.

The steps in this embodiment correspond to the functions implemented by the components in the system-on-chip in the embodiment shown in FIG. 3. For details, refer to related existing descriptions in FIG. 3. Details are not described herein again.

The following further describes the foregoing data processing method with reference to FIG. 6. FIG. 6 is a flowchart of a data processing method according to an embodiment of this application. As shown in FIG. 6, in a scenario in which a producer writes data into a consumer, the method may include the following steps.

Step A1: Before generating data, the producer applies for an output buffer. In an example, in a scenario in which the consumer reads the data from the producer, a processor or the producer may notify, after applying for and obtaining the output buffer, the consumer of an address (for example, a virtual address) corresponding to the output buffer.

The producer may be, for example, the first circuit 304 shown in FIG. 3, and is represented as a data block at a framework layer. The buffer (Buffer) is storage space of a specified size reserved in a memory, and is used to temporarily store input/output (I/O) data. The producer outputs the data. Therefore, the output buffer is applied for temporarily storing the output data.

Step A2: The producer invokes image buffer hardware abstraction (for example, Gralloc) by using producer hardware abstraction at a hardware abstraction layer, to apply for the output buffer for the to-be-generated data.

The producer may send a buffer allocation request by using the producer hardware abstraction at the hardware abstraction layer, to invoke the image buffer hardware abstraction. The producer, for example, the first circuit 304, may fill a format conversion identifier in the allocation request, to indicate to memory management that data format conversion is required before the generated data is transferred to the consumer. For example, when applying for an output buffer for a video frame to be transferred to the neural network processing unit, the video decoder in FIG. 1 fills a format conversion identifier in an allocation request.

Step A3: The image buffer hardware abstraction applies to the memory management at a kernel driver layer for the output buffer.

After receiving the allocation request, the memory management allocates the output buffer for the data generated by the producer. In this way, the memory management may indicate memory hardware, for example, an MMU (Memory Management Unit) or an SMMU (System Memory Management Unit) in the processor, to allocate the output buffer, and a mapping relationship between a physical address and a virtual address of the output buffer is correspondingly filled in a page table. In addition, after identifying the format conversion identifier in the allocation request, the MMU or the SMMU fills a flag in the physical address of the output buffer, to indicate whether a data format conversion module is required for reading/writing of data in the output buffer (Buffer). For example, the flag may be obtained by filling a format conversion identifier AID in an extended bit of a 64-bit physical address. In an example, when the flag is set to 1 (that is, the AID is 1), it indicates that an accelerator, that is, the data format conversion circuit 302 is required to perform data format conversion for reading/writing of data; or when the flag is set to 0, it indicates that an accelerator is not required to perform processing for reading/writing of data.

Step A4: The producer invokes accelerator hardware abstraction by using the producer hardware abstraction, to configure a data format required by the consumer.

For example, that the accelerator hardware abstraction configures the data format required by the consumer may specifically include configuring producer identifiers such as a master ID (MID), an operation type indicating a data format conversion manner (or indicating a format of information into which data is to be converted), and an address of the output buffer. The address may be a physical address or a virtual address, and may be specifically set based on an application requirement.

Step C1: The accelerator hardware abstraction generates configuration information used to allocate a hardware resource and configure a register, and delivers the configuration information to an accelerator driver.

In this way, the accelerator driver may configure the hardware register based on the configuration information, to perform data format conversion.

Step A5: After obtaining an allocation result of the output buffer, for example, a virtual address of address space corresponding to the output buffer, the producer invokes, by using a producer driver, the producer hardware abstraction to map the virtual address into a physical address.

In view of this, the producer sends the physical address and corresponding data through a bus. In this case, a controller in the bus may identify the extended bit of the physical address to determine the format conversion identifier, for example, the AID.

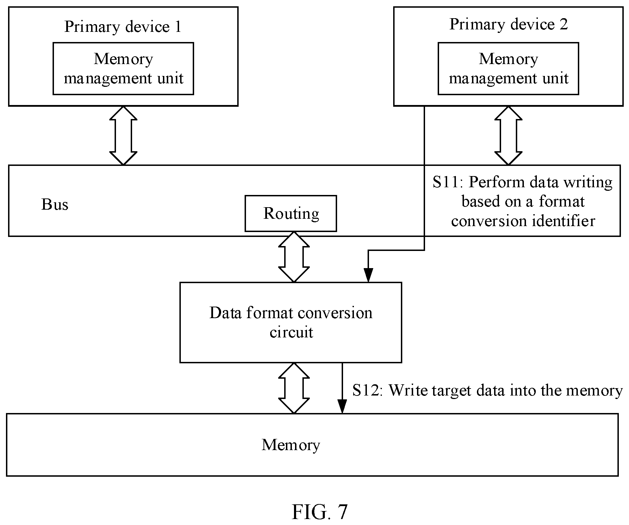

For example, FIG. 7 is a flowchart in which a data processing method is applied to a data writing scenario according to an embodiment of this application. As shown in FIG. 7, the system-on-chip 300 further includes a processor providing a memory management unit.

Correspondingly, after the first circuit 304 generates data to be transferred to the second circuit 305, the method provided in this embodiment of this application may further include the following steps.

S11: A primary device 2 (for example, the first circuit 304) performs data writing based on a format conversion identifier.

For example, the first circuit 304 applies to the processor for address space for storing data, and indicates, in the application, that the data has a data format conversion requirement. The processor allocates the address space for the data based on the application of the primary device 2, and fills, based on the data format conversion requirement indicated in the application (for example, an allocation request, sent by the primary device 2, of the address space includes the format conversion identifier), the format conversion identifier in an extended bit of an address corresponding to the address space. A bus identifies the extended bit of the address to determine the format conversion identifier, and sends the data to a data format conversion circuit based on the format conversion identifier. This step and A1 to A5 in FIG. 6 are similar steps, and a difference lies in that the description in FIG. 7 is concise for ease of understanding. For details, refer to the descriptions of A1 to A5 in FIG. 6. Details are not described herein again.

S12: The data format conversion circuit writes target data into a memory, where the target data is obtained by the data format conversion circuit by performing data format conversion on the data.

After receiving the data sent by the bus, the data format conversion circuit performs data format conversion on the data based on a preconfiguration of an accelerator driver. For the preconfiguration of the accelerator driver, refer to the descriptions of step A4 and step C1 in FIG. 6. Details are not described herein again.

Still refer to FIG. 6. In a scenario in which the consumer reads the data from the producer, the data processing method provided in this embodiment of this application may include the following steps.

Step B1: After requesting the address from the producer or receiving the address of the output buffer actively sent by the producer, for example, the virtual address of the address space corresponding to the output buffer, the consumer sends a read request to consumer hardware abstraction to map the output buffer, that is, requests to map the virtual address into the physical address for reading the data.

For example, with reference to A3 in FIG. 6, the format conversion identifier exists in the extended bit of the physical address obtained through mapping. In this way, the consumer may fill the physical address in the read request, to indicate that the data read by the consumer needs to be processed by the data format conversion circuit before being transferred to the consumer.

Step B2: The consumer configures, by using consumer hardware, a data format required by the producer.

B2 and A4 in the writing scenario in FIG. 7 are similar steps, and a difference lies in that in the reading scenario, the data is read from the producer, and therefore, the data format required by the producer is configured. For example, consumer identifiers such as a master ID (MID), an operation type indicating a data format conversion manner (or indicating a format of information into which data is to be converted), and the address of the output buffer are configured. For a same part, details are not described herein again. For details, refer to the existing description in step A4 above.

Step B3: The consumer hardware abstraction requests a consumer driver to map the virtual address.

For example, the consumer hardware abstraction sends the read request to the consumer driver, and then the consumer driver sends the read request to the memory hardware by using the consumer hardware. The memory hardware maps, based on the read request, the virtual address of the address space corresponding to the buffer into the physical address by using the page table, and sends the physical address to the consumer.

It may be understood that step B3 above is a process in which the primary device 2 maps, by using software, the virtual address corresponding to the output buffer to obtain the physical address.

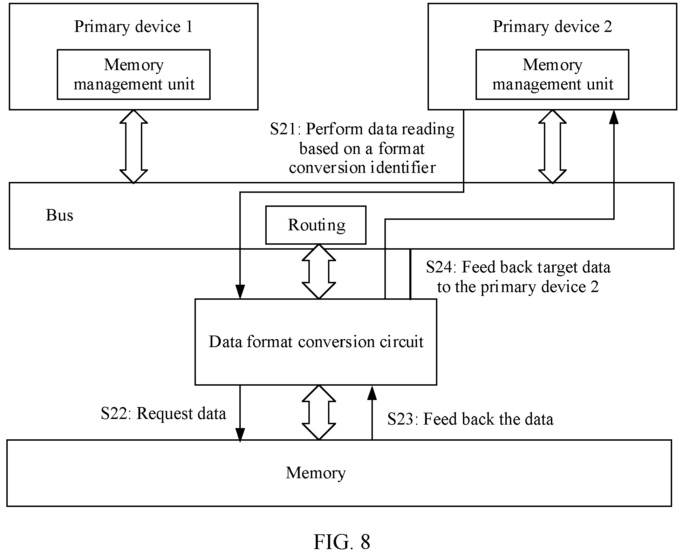

For example, FIG. 8 is a flowchart in which a data processing method is applied to a data reading scenario according to an embodiment of this application. As shown in FIG. 8, it is assumed that a primary device 1 is the first circuit 304, configured to generate data, and a primary device 2 is the second circuit 305, configured to consume the data. In view of this, in the data reading scenario, according to the data processing method provided in this embodiment of this application, after the first circuit 304 generates the data, the data may be specifically transferred to the second circuit 305 by using the following steps.

S21: The primary device 2 (for example, the second circuit 305) performs data reading based on a format conversion identifier.

After the primary device 2 performs B3 above by using a memory management unit, for example, the memory management and memory hardware shown in FIG. 6, a consumer, for example, the primary device 2, may generate a read request including a physical address of the read data, and send the read request to a bus. The bus identifies an extended bit of the physical address in the read request by using a controller in the bus, to determine the format conversion identifier such as an AID, and sends the read request to a data format conversion circuit based on the format conversion identifier. For example, AID=1, and the bus sends the read request to the data format conversion circuit.

S22: The data format conversion circuit requests the data from a memory such as a DDR or an SR based on the received read request.

S23: The memory feeds back the data to the data format conversion circuit in response to the request.

After receiving the data, the data format conversion circuit performs data format conversion on the data based on the preconfiguration in step B2 in FIG. 6, to obtain target data.

S24: The data format conversion circuit feeds back the target data to the primary device 2 through the bus.

It may be understood that routing performed by the bus in FIG. 7 and FIG. 8 may include identification of the extended bit of the physical address, and sending of the data or the read request based on an identification result.

An embodiment further provides a computer storage medium. The computer storage medium stores computer instructions. When the computer instructions are run on an electronic device, the electronic device is enabled to perform the foregoing related method steps, to implement the data processing method in the foregoing embodiments.

An embodiment further provides a computer program product. When the computer program product runs on a computer, the computer is enabled to perform the foregoing related steps, to implement the data processing method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the data processing method in the foregoing method embodiments.

The electronic device, the computer storage medium, the computer program product, or the chip provided in embodiments is configured to perform the corresponding method provided above. Therefore, for beneficial effect that can be achieved, refer to the beneficial effect of the corresponding method provided above. Details are not described herein again.

Based on the descriptions of the foregoing implementations, a person skilled in the art may understand that, for a purpose of convenient and brief description, division into the foregoing functional modules is used as an example for illustration. In actual application, the foregoing functions may be allocated to different functional modules to be implemented based on a requirement. In other words, an inner structure of an apparatus is divided into different functional modules to complete all or some of the functions described above.

In the several embodiments provided in this application, it should be understood that the disclosed apparatus and method may be implemented in another manner. For example, the described apparatus embodiment is merely an example. For example, division into the modules or units is merely logical function division. There may be another division manner in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content shall fall within the scope of this application.

When the integrated unit is implemented in the form of the software functional unit and sold or used as an independent product, the integrated unit may be stored in a readable storage medium. Based on such an understanding, the technical solutions of embodiments of this application essentially, or the part contributing to conventional technologies, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the method described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

Methods or algorithm steps described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an application-specific integrated circuit (Application-Specific Integrated Circuit, ASIC). In addition, the ASIC may be located in an electronic device. Certainly, the processor and the storage medium may alternatively exist in the electronic device as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another place. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system-on-chip, comprising a bus, a data format conversion circuit, an on-chip memory, a first circuit, and a second circuit, wherein the first circuit, the second circuit, the on-chip memory, and the data format conversion circuit are respectively coupled to the bus, and the data format conversion circuit is coupled to the on-chip memory;
the first circuit is configured to generate data;
the data format conversion circuit is configured to: obtain the data through the bus; perform data format conversion on the data to obtain target data; and send the target data to the bus, or store the target data in the on-chip memory;
the bus is configured to transmit the target data from the data format conversion circuit or the on-chip memory to the second circuit; and
the second circuit is configured to: obtain the target data in the data format conversion circuit through the bus, or read the target data from the on-chip memory through the bus.

2. The system-on-chip according to claim 1, wherein a buffer is disposed in the data format conversion circuit; and
the data format conversion circuit is specifically configured to: store, by using the buffer, the data transmitted by the bus, and obtain the data from the buffer to perform data format conversion.

3. The system-on-chip according to claim 2, wherein the data format conversion circuit is further configured to: when occupied storage space of the buffer reaches a first space threshold, store, by using the on-chip memory, the data transmitted by the bus; and obtain the data from the on-chip memory to perform data format conversion, or obtain the data from the buffer and the on-chip memory to perform data format conversion.

4. The system-on-chip according to any one of claims 1 to 3, wherein the system-on-chip further comprises an external storage interface, and the external storage interface is coupled to the on-chip memory;
the external storage interface is configured to connect to an external memory;
the data format conversion circuit is further configured to store the target data in the external memory through the external storage interface; and
the second circuit is further configured to read the target data from the external memory through the bus.

5. The system-on-chip according to claim 3 or 4, wherein the system-on-chip further comprises the external storage interface, the external storage interface is coupled to the on-chip memory, and the external storage interface is connected to the external memory; and
the data format conversion circuit is further configured to: when occupied storage space of the on-chip memory reaches a second space threshold, store, in the external memory through the external storage interface, the data transmitted by the bus; and obtain the data from the external memory to perform data format conversion, or obtain the data from the on-chip memory and the external memory to perform data format conversion.

6. The system-on-chip according to any one of claims 1 to 5, wherein the system-on-chip further comprises a processor;
the first circuit is further configured to: before generating the data, send an allocation request to the processor to apply for address space for storing the data and indicate to perform data format conversion on the data;
the processor is configured to: allocate the address space for the data based on the allocation request, and fill a format conversion identifier in an extended bit of an address corresponding to the address space;
the first circuit is specifically configured to generate the data based on the address; and
the bus is specifically configured to: identify the extended bit of the address to determine the format conversion identifier, and send the data to the data format conversion circuit based on the format conversion identifier.

7. The system-on-chip according to any one of claims 1 to 6, wherein the system-on-chip further comprises the processor;
the first circuit is further configured to: before generating the data, send the allocation request to the processor to apply for the address space for storing the data and indicate to perform data format conversion on the data;
the processor is configured to: allocate the address space for the data based on the allocation request, and fill the format conversion identifier in the extended bit of the address corresponding to the address space;
the first circuit is specifically configured to generate the data based on the address;
the second circuit is further configured to: before obtaining the target data in the data format conversion circuit through the bus or reading the target data from the on-chip memory through the bus, obtain the address by using the processor, and send a read request comprising the address;
the bus is further configured to: identify the extended bit of the address in the read request to determine the format conversion identifier, and send the read request to the data format conversion circuit based on the format conversion identifier; and
the data format conversion circuit is specifically configured to: read the data based on the address in the read request, and perform data format conversion on the data to obtain the target data.

8. A data processing method, applied to a system-on-chip, wherein the system-on-chip comprises a bus, a data format conversion circuit, an on-chip memory, a first circuit, and a second circuit, wherein the first circuit, the second circuit, the on-chip memory, and the data format conversion circuit are respectively coupled to the bus, and the data format conversion circuit is coupled to the on-chip memory; and the method comprises:
generating, by the first circuit, data;
obtaining, by the data format conversion circuit, the data through the bus; performing data format conversion on the data to obtain target data; and sending the target data to the bus, or storing the target data in the on-chip memory;
transmitting, by the bus, the target data from the data format conversion circuit or the on-chip memory to the second circuit; and
obtaining, by the second circuit, the target data in the data format conversion circuit through the bus, or reading the target data from the on-chip memory.

9. The method according to claim 8, wherein a buffer is disposed in the data format conversion circuit; and
before the performing, by the data format conversion circuit, data format conversion on the data, the method further comprises:
storing, by the data format conversion circuit by using the buffer, the data transmitted by the bus, and obtaining the data from the buffer to perform data format conversion.

10. The method according to claim 9, wherein before the storing, by the data format conversion circuit by using the buffer, the data transmitted by the bus, the method further comprises:
when occupied storage space of the buffer reaches a first space threshold, storing, by the data format conversion circuit by using the on-chip memory, the data transmitted by the bus; and obtaining the data from the on-chip memory to perform data format conversion, or obtaining the data from the buffer and the on-chip memory to perform data format conversion.

11. The method according to any one of claims 8 to 10, wherein the system-on-chip further comprises an external storage interface, the external storage interface is coupled to the on-chip memory, and the external storage interface is connected to an external memory; and
after the performing, by the data format conversion circuit, data format conversion on the data to obtain target data, the method further comprises:
storing, by the data format conversion circuit, the target data in the external memory through the external storage interface; and
reading, by the second circuit, the target data from the external memory through the bus.

12. The method according to claim 10 or 11, wherein the system-on-chip further comprises the external storage interface, the external storage interface is coupled to the on-chip memory, and the external storage interface is connected to the external memory; and
before the storing, by the data format conversion circuit by using the on-chip memory, the data transmitted by the bus, the method further comprises:
when occupied storage space of the on-chip memory reaches a second space threshold, storing, by the data format conversion circuit, the data in the external memory through the external storage interface to perform data format conversion, or obtaining the data from the on-chip memory and the external memory to perform data format conversion.

13. The method according to any one of claims 8 to 12, wherein the system-on-chip further comprises a processor;
the generating, by the first circuit, data to be transferred to the second circuit comprises:
sending, by the first circuit, an allocation request to the processor to apply for address space for storing the data and indicate to perform data format conversion on the data;
allocating, by the processor, the address space for the data based on the allocation request, and filling a format conversion identifier in an extended bit of an address corresponding to the address space; and
generating, by the first circuit based on the address, the data to be transferred to the second circuit; and
the obtaining, by the data format conversion circuit, the data through the bus comprises:
identifying, by the bus, the extended bit of the address to determine the format conversion identifier, and sending the data to the data format conversion circuit based on the format conversion identifier.

14. The method according to any one of claims 8 to 13, wherein the system-on-chip further comprises the processor;
the generating, by the first circuit, data to be transferred to the second circuit comprises:
sending, by the first circuit, the allocation request to the processor to apply for the address space for storing the data and indicate to perform data format conversion on the data;
allocating, by the processor, the address space for the data based on the allocation request, and filling the format conversion identifier in the extended bit of the address corresponding to the address space; and
generating, by the first circuit based on the address, the data to be transferred to the second circuit;
before the obtaining, by the second circuit, the target data in the data format conversion circuit through the bus, or reading the target data from the on-chip memory, the method further comprises:
obtaining, by the second circuit, the address by using the processor, and sending a read request comprising the address; and
the obtaining, by the data format conversion circuit, the data through the bus comprises:
identifying, by the bus, the extended bit of the address in the read request
to determine the format conversion identifier, and sending the read request to the data format conversion circuit based on the format conversion identifier; and
reading, by the data format conversion circuit, the data based on the address in the read request.

15. An electronic device, comprising the system-on-chip according to any one of claims 1 to 6 and a memory, wherein
the memory is configured to store one or more programs; and
when the one or more programs are executed by the system-on-chip, the system-on-chip is enabled to implement the method according to any one of claims 8 to 14.

16. A computer-readable storage medium, comprising a computer program, wherein when the computer program is run on a system-on-chip, the system-on-chip is enabled to perform the method according to any one of claims 8 to 14.

17. A computer program product, comprising a computer program, wherein when the computer program is executed by an electronic device, the electronic device is enabled to perform the method according to any one of claims 8 to 14, and the electronic device comprises the system-on-chip according to any one of claims 1 to 7.
